# FASCICULE DE BREVET EUROPEEN

(11) **EP 2 529 647 B1**
(45) Date de publication et mention de la délivrance du brevet: **02.07.2014**
(21) Numéro de dépôt: 12169624.9
(22) Date de dépôt: 25.05.2012
(51) Int. Cl.: A47J 27/09, A47J 27/092

(54) **Soupape de sécurité pour appareil de cuisson sous pression et dispositif incluant une telle soupape**
Sicherheitsventil für Druckkochgerät, und ein solches Ventil umfassende Vorrichtung
Safety valve for pressure-cooking appliance and device including such a valve

(30) Priorité: 01.06.2011 FR 1154852
(43) Date de publication de la demande: 05.12.2012
(73) Titulaire: SEB S.A., 69130 Ecully (FR)
(72) Inventeur: Seurat-Guiochet, Claire Marie-Aurore, 21490 Bretigny (FR); Anota, Daniel, Jean-Marie, 21000 Dijon (FR)
(74) Mandataire: Weber, Jean-François

(56) Documents cités:
- DE-U1- 29 501 112
- DE-U1- 29 518 107
- FR-A1- 2 445 714

## Description

La présente invention se rapporte au domaine technique général des appareils domestiques de cuisson d'aliments sous pression comprenant une cuve et un couvercle destiné à être verrouillé sur la cuve pour former une enceinte de cuisson sensiblement étanche, lesdits appareils étant destinés à assurer la cuisson sous pression de vapeur des aliments contenus dans la cuve.

La présente invention concerne plus particulièrement une soupape de sécurité pour appareil de cuisson sous pression de vapeur pourvu d'un orifice mettant en communication l'intérieur de l'appareil avec l'extérieur, ladite soupape comprenant d'une part un corps souple traversé par une ouverture et d'autre part un obturateur embarqué sur le corps souple pour occuper au moins une position de fermeture de ladite ouverture, ledit corps souple étant conçu pour être monté sur l'appareil de façon à occuper au moins une position d'étanchéité dans laquelle la soupape ferme ledit orifice, ledit obturateur étant conçu pour quitter sa position de fermeture afin d'autoriser une fuite de vapeur par ladite ouverture lorsque la pression régnant dans l'appareil atteint un premier niveau de sécurité.

Une telle soupape est connue du document FR 2 445 714.

La présente invention concerne également un dispositif de cuisson sous pression comprenant :
- un appareil de cuisson sous pression de vapeur pourvu d'un orifice mettant en communication l'intérieur de l'appareil avec l'extérieur,
- et une soupape de sécurité comprenant d'une part un corps souple traversé par une ouverture et d'autre part un obturateur embarqué sur le corps souple pour occuper au moins une position de fermeture de ladite ouverture, ledit corps souple étant conçu pour être monté sur l'appareil de façon à occuper au moins une position d'étanchéité dans laquelle la soupape ferme ledit orifice, ledit obturateur étant conçu pour quitter sa position de fermeture afin d'autoriser une fuite de vapeur par ladite ouverture lorsque la pression régnant dans l'appareil atteint un premier niveau de sécurité.

Les appareils de cuisson d'aliments sous pression de vapeur sont généralement pourvus d'une soupape de sécurité permettant de réaliser une fuite de vapeur, et donc une fuite de pression, lorsque la pression régnant dans l'appareil atteint une valeur anormale, du fait par exemple d'un dysfonctionnement de la soupape de régulation.

On connaît ainsi différents types de soupapes de sécurité, comme par exemple les soupapes de sécurité à ressort, à doigt éjectable ou à fusible.

Ces soupapes de sécurité connues ne sont toutefois pas elles-mêmes à l'abri d'un dysfonctionnement. C'est pourquoi il est connu de recourir à un dispositif de sécurité ultime, conçu pour faire chuter la pression lorsque la soupape de sécurité n'a elle-même pas fonctionné correctement, voire pas fonctionné du tout. Ce dispositif de sécurité ultime peut consister par exemple en une conception particulière du joint de couvercle, qui autorise sa déformation en cas de surpression importante, cette déformation entraînant une fuite de vapeur (« *fuite au joint* »)*.* Cette sécurité ultime à la surpression peut également être obtenue par déformation des éléments métalliques constituant l'autocuiseur (cuve, couvercle, moyens de verrouillage), permettant d'interrompre au moins localement l'étanchéité de l'ensemble.

Toutes ces solutions, si elles donnent globalement satisfaction en permettant d'équiper un autocuiseur d'une soupape de sécurité à surpression et d'un dispositif de sécurité ultime à la surpression, n'en présentent pas moins certains inconvénients.

En particulier, ces solutions s'avèrent relativement complexes dans leur conception et leur mise en oeuvre et présentent également un coût non négligeable.

Ces systèmes connus sont en outre difficiles à modifier pour régler les niveaux de pression de sécurité, compte tenu du grand nombre de paramètres qu'ils impliquent et de la complexité des relations entre ces paramètres.

Certains de ces systèmes connus mettent en oeuvre un matériau fusible qui fond à une température prédéterminée correspondant à un niveau de pression de sécurité. De tels dispositifs mettant en oeuvre un matériau fusible présentent un risque alimentaire (des résidus de matériaux fusibles pouvant tomber et se mélanger à la nourriture, sans forcément que l'utilisateur n'en ait conscience) ainsi qu'un caractère irréversible qui empêche l'utilisateur de réutiliser facilement son appareil, l'obligeant à recourir à un service après-vente.

Ce problème d'irréversibilité se rencontre aussi avec les appareils mettant en oeuvre, à titre de sécurité ultime, une déformation des composants métalliques de l'autocuiseur (cuve, couvercle, moyens de verrouillage) pour générer une fuite. En effet, une telle déformation se produit généralement dans le domaine plastique, de sorte que l'autocuiseur est ensuite irrémédiablement déformé et donc inutilisable.

Les soupapes de sécurité à ressort sont quant à elles relativement complexes et onéreuses à fabriquer, ne sont pas d'une précision optimale et ne permettent pas un nettoyage facile, tandis que les soupapes de sécurité à doigt éjectable présentent l'inconvénient majeur de générer, en cas de surpression, la projection, sous l'effet de la pression régnant dans l'autocuiseur, d'un doigt métallique qui peut blesser l'utilisateur et/ou être perdu.

Les objets assignés à l'invention visent en conséquence à porter remède aux différents inconvénients énumérés précédemment et à proposer une nouvelle soupape de sécurité pour appareil de cuisson sous pression qui peut assurer non seulement une fonction de sécurité à la surpression, mais également une fonction de sécurité ultime à la surpression, tout en étant d'un fonctionnement particulièrement sûr, fiable et réversible ainsi que de conception simple, peu onéreuse et permettant un nettoyage et un montage rapides et faciles par un utilisateur non averti.

Un autre objet de l'invention vise à proposer une nouvelle soupape de sécurité de construction extrêmement simple, compacte et bon marché.

Un autre objet d'invention vise à proposer une nouvelle soupape de sécurité dont le fonctionnement reste particulièrement sûr pour l'utilisateur même lorsque la soupape subit un échauffement anormalement et exceptionnellement élevé.

Un autre objet de l'invention vise à proposer une nouvelle soupape de sécurité qui fonctionne selon des principes extrêmement simples et éprouvés.

Un autre objet de l'invention vise à proposer une nouvelle soupape de sécurité qui permet d'assurer une fonction de purge d'air préalablement à la cuisson sous pression proprement dite.

Un autre objet d'invention vise à proposer une nouvelle soupape de sécurité dont la conception met en oeuvre un nombre très réduit de pièces différentes.

Un autre objet d'invention vise à proposer une nouvelle soupape de sécurité qui forme en permanence, et quelles que soient les conditions de pression auxquelles elle est soumise, un ensemble unitaire.

Un autre objet d'invention vise à proposer un nouveau dispositif de cuisson sous pression dont la soupape de sécurité répond aux différentes exigences exposées ci-avant.

Les objets assignés à l'invention sont atteints à l'aide d'une soupape de sécurité pour appareil de cuisson sous pression de vapeur pourvu d'un orifice mettant en communication l'intérieur de l'appareil avec l'extérieur, ladite soupape comprenant d'une part un corps souple traversé par une ouverture et d'autre part un obturateur embarqué sur le corps souple pour occuper au moins une position de fermeture de ladite ouverture, ledit corps souple étant conçu pour être monté sur l'appareil de façon à occuper au moins une position d'étanchéité dans laquelle la soupape ferme ledit orifice, ledit obturateur étant conçu pour quitter sa position de fermeture afin d'autoriser une fuite de vapeur par ladite ouverture lorsque la pression régnant dans l'appareil atteint un premier niveau de sécurité, **caractérisée en ce que** ledit corps souple est conçu pour quitter sa position d'étanchéité afin d'autoriser une fuite de vapeur par ledit orifice lorsque la pression régnant dans l'appareil atteint un deuxième niveau de sécurité, ladite soupape comprenant un premier organe de retenue qui fait partie du corps souple et qui est conçu pour empêcher la séparation de l'appareil et du corps souple une fois que ce dernier a quitté sa position d'étanchéité.

Les objets assignés à l'invention sont également atteints à l'aide d'un dispositif de cuisson sous pression comprenant :
- un appareil de cuisson sous pression de vapeur pourvu d'un orifice mettant en communication l'intérieur de l'appareil avec l'extérieur,
- et une soupape de sécurité comprenant d'une part un corps souple traversé par une ouverture d'autre part un obturateur embarqué sur le corps souple pour occuper au moins une position de fermeture de ladite ouverture, ledit corps souple étant conçu pour être monté sur l'appareil de façon à occuper au moins une position d'étanchéité dans laquelle la soupape ferme ledit orifice, ledit obturateur étant conçu pour quitter sa position de fermeture afin d'autoriser une fuite de vapeur par ladite ouverture lorsque la pression régnant dans l'appareil atteint un premier niveau de sécurité,
**caractérisé en ce que** ledit corps souple est conçu pour quitter sa position d'étanchéité afin d'autoriser une fuite de vapeur par ledit orifice lorsque la pression régnant dans l'appareil atteint un deuxième niveau de sécurité, ladite soupape comprenant un premier organe de retenue qui fait partie du corps souple et qui est conçu pour empêcher la séparation de l'appareil et du corps souple une fois que ce dernier a quitté sa position d'étanchéité.

D'autres particularités et avantages de l'invention apparaîtront et ressortiront plus en détail à la lecture de la description faite ci-après, en référence aux dessins annexés, donnés à titre purement illustratifs et non limitatifs, dans lesquels :
- La figure 1 illustre, selon une vue schématique en perspective, le couvercle d'un appareil de cuisson sous pression de vapeur et la soupape de sécurité conforme à l'invention destinée à équiper le couvercle en question.
- La figure 2 illustre, selon une vue schématisée en coupe, la soupape de sécurité de la figure 1 montée sur le couvercle de l'appareil de cuisson sous pression, la soupape de sécurité se trouvant dans une configuration correspondant à l'absence de pressurisation de l'appareil (c'est-à-dire que la pression régnant à l'intérieur de l'appareil est sensiblement égale à la pression atmosphérique).
- La figure 3 est une vue en perspective et en coupe partielle de la figure 2.
- La figure 4 illustre, selon une vue schématique en coupe, la soupape de sécurité des figures 2 et 3 lorsque la pression régnant dans l'appareil atteint un niveau prédéterminé de fin de purge générant l'atteinte, par l'obturateur de la soupape, de sa position de fermeture.
- La figure 5 est une vue en perspective et en coupe partielle de la figure 6.
- La figure 6 illustre, selon une vue schématique en coupe, la soupape de sécurité des figures 2 et 3 lorsque la pression régnant dans l'appareil atteint un premier niveau de sécurité, l'obturateur de la soupape étant hors de sa position de fermeture et autorisant une fuite de vapeur permettant la chute de la pression régnant dans l'appareil.
- la figure 7 est une vue en perspective et en coupe partielle de la figure 6.
- La figure 8 illustre, selon une vue schématique en coupe, la soupape de sécurité des figures 1 à 7 lorsque la pression régnant dans l'appareil atteint un deuxième niveau de sécurité, de sorte que le corps souple de la soupape a quitté sa position d'étanchéité pour autoriser une fuite de vapeur par l'orifice du couvercle.
- La figure 9 est une vue en perspective et en coupe partielle de la figure 8.
- Les figures 10 à 12 représentent le corps souple de la soupape de sécurité illustrée aux figures précédentes sous différents angles de vue respectifs.
- La figure 13 illustre, selon une vue en perspective, l'obturateur de la soupape de sécurité des figures précédentes.
- La figure 14 est une vue de côté de l'obturateur de la figure 13.
- La figure 15 illustre, selon une vue en coupe partielle, la soupape de sécurité des figures précédentes avec son obturateur monté à l'envers.
- La figure 16 illustre, selon une vue en coupe partielle, la soupape de sécurité des figures précédentes montée à l'envers sur le couvercle.
- La figure 17 illustre, selon une vue en coupe partielle, la soupape de sécurité des figures précédentes montée à l'envers et avec son corps souple en dehors de sa position d'étanchéité.
- La figure 18 illustre, selon une vue schématique en coupe, la soupape de la figure 17 avec son obturateur dans une autre position que celle illustrée à la figure 17.

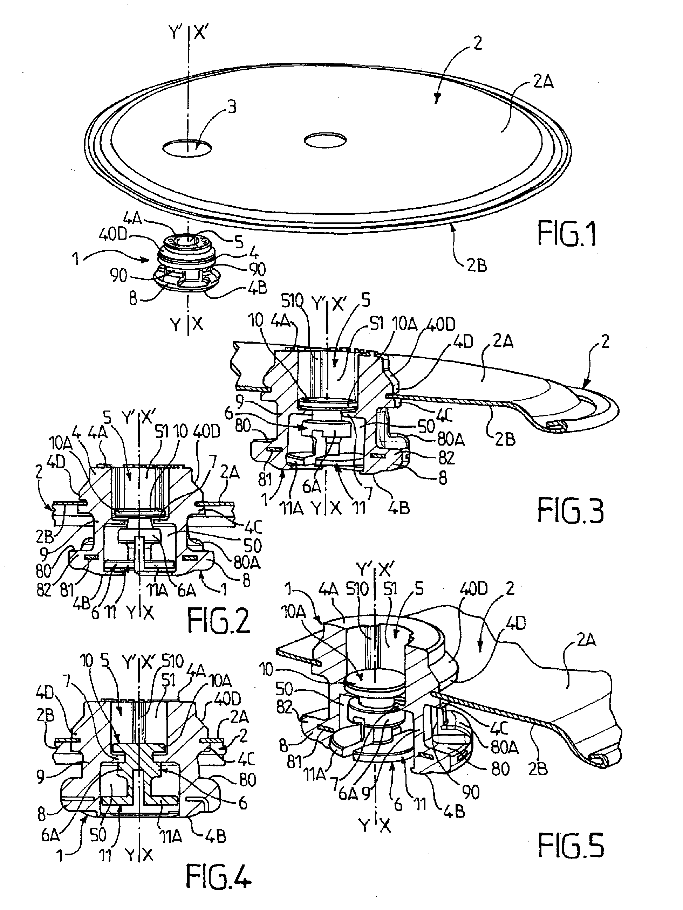

L'invention concerne une soupape de sécurité 1 pour appareil de cuisson sous pression de vapeur, c'est-à-dire un appareil conçu pour cuire des aliments en présence de vapeur, ladite vapeur étant générée par le chauffage, au sein de l'appareil et en présence des aliments, d'un liquide de cuisson, par exemple un liquide aqueux. Ledit appareil de cuisson sous pression de vapeur comporte, de manière connue en soi, une cuve (non représentée aux figures) et un couvercle 2 destiné à être rapporté de manière sensiblement étanche sur la cuve pour former une enceinte de cuisson capable de monter en pression lorsqu'elle est soumise à l'influence d'une source de chauffe (embarquée ou externe), jusqu'à un niveau de pression prédéterminé dit « *pression de fonctionnement* » auquel la pression est maintenue grâce à une soupape de régulation équipant l'appareil. Cet appareil de cuisson sous pression de vapeur est pourvu d'un orifice 3 mettant en communication l'intérieur de l'appareil avec l'extérieur. En d'autres termes, l'orifice 3 en question permet de faire communiquer l'intérieur de l'enceinte de cuisson formée par la cuve et le couvercle 2 avec l'environnement extérieur. De préférence, l'orifice 3 est ménagé à travers le couvercle 2, à travers l'épaisseur du couvercle 2, entre les faces externe 2A et interne 2B de ce dernier. L'orifice 3 présente par exemple, comme illustré, une forme sensiblement circulaire, d'axe de symétrie Y-Y'. Bien entendu, l'appareil de cuisson sous pression peut être équipé de plusieurs orifices (par exemple deux orifices comme illustré à la figure 1), dont fait partie l'orifice 3, lesdits orifices étant de préférence tous ménagés à travers le couvercle 2 et étant chacun dédiés à une fonction spécifique, la fonction dévolue à l'orifice 3 étant de coopérer avec la soupape de sécurité 1, comme cela est exposé plus en détail dans ce qui suit.

La soupape de sécurité 1 conforme à l'invention comprend un corps souple 4, réalisé de préférence majoritairement, voire essentiellement, en un matériau non métallique, comme par exemple un matériau élastomère ou un caoutchouc.

Le matériau formant le corps souple 4 est choisi pour permettre de réaliser une bonne étanchéité par contact avec un matériau métallique, sans qu'il ne soit forcément besoin de recourir à des tolérances de fabrication extrêmement réduites. A cet égard, les matériaux élastomères ou le caoutchouc donnent toute satisfaction puisqu'ils permettent, en étant légèrement pressés contre un corps métallique, d'assurer un contact étanche avec ce dernier. De préférence, le corps souple 4 présente sensiblement une forme de révolution d'axe de symétrie X-X'. Comme illustré aux figures, le corps souple 4 est traversé par une ouverture 5, laquelle s'étend de préférence axialement (selon l'axe X-X') entre une face supérieure 4A et une face inférieure 4B du corps souple 4, lesdites faces supérieure 4A et inférieure 4B étant séparées par l'épaisseur du corps souple 4. L'ouverture 5 est donc une ouverture axiale débouchante qui s'étend à travers toute l'épaisseur du corps souple 4 et débouche au niveau à la fois de la face supérieure 4A et de la face inférieure 4B. La soupape 1 comprend en outre un obturateur 6 embarqué sur le corps souple 4 pour occuper au moins une position de fermeture de ladite ouverture 5. En d'autres termes, l'obturateur 6 est monté sur le corps souple 4 de façon à former avec ce dernier un sous-ensemble unitaire constituant avantageusement la soupape de sécurité 1. Comme exposé précédemment, l'obturateur 6 est conçu pour occuper au moins une position de fermeture (illustrée aux figures 4 et 5) de l'ouverture 5 dans laquelle il obture sensiblement hermétiquement ladite ouverture 5, de façon à éviter toute fuite de vapeur par l'ouverture 5 et permettre ainsi, comme cela sera exposé plus en détail dans ce qui suit, une montée en pression de l'appareil de cuisson jusqu'à une pression fonctionnelle (régulée de préférence par une soupape de régulation) excédant par exemple la pression atmosphérique d'une valeur comprise entre 10 kPa et 90 kPa. La position de fermeture de l'obturateur 6 est donc une position de fermeture étanche (à la vapeur) de l'ouverture 5 pour permettre une pressurisation de l'appareil de cuisson équipé de la soupape de sécurité 1. Le corps souple 4 est conçu pour être monté sur l'appareil de cuisson sous pression de façon à occuper au moins une position d'étanchéité dans laquelle la soupape 1 ferme l'orifice 3 mettant en communication l'intérieur de l'appareil avec l'extérieur. Le corps souple 4 est donc avantageusement conçu pour former l'interface de fixation de la soupape de sécurité 1 à l'appareil, et de préférence au couvercle 2, l'obturateur 6 étant quant à lui lié exclusivement au corps souple 4. Dans sa position d'étanchéité (illustré à la figure 2 à 7 et 15), le corps souple 4 est fixé à l'appareil de cuisson, et de préférence au couvercle 2 de ce dernier, de manière à obturer sensiblement hermétiquement l'orifice 3 lorsque l'obturateur 6 occupe sa position de fermeture.

Par obturation hermétique, on désigne ici, comme précédemment, la mise en oeuvre d'un degré d'étanchéité suffisant pour permettre la montée en pression de l'enceinte de cuisson de l'appareil jusqu'à un niveau fonctionnel (pression de fonctionnement), auquel la pression est maintenue à l'aide d'une soupape de régulation. Le corps souple 4 joue ainsi le rôle d'une double interface d'étanchéité, avec l'appareil (et de préférence le couvercle 2 de ce dernier) d'une part, et avec l'obturateur 6 d'autre part. De préférence, le corps souple 4 comprend au moins une première lèvre extérieure d'étanchéité 4C conçue pour assurer une interface de contact étanche entre l'appareil de cuisson sous pression et le corps souple 4 lorsque ce dernier occupe sa position d'étanchéité (illustrée aux figures 2 à 5), ladite première lèvre extérieure d'étanchéité 4C étant conçue pour se trouver à l'intérieur de l'appareil, au sein de l'enceinte de cuisson, tant que le corps souple 4 occupe sa position d'étanchéité. La première lèvre extérieure d'étanchéité 4C se présente avantageusement sous la forme d'une collerette souple s'étendant vers l'extérieur du corps souple 4. La première lèvre extérieure d'étanchéité 4C vient de préférence de matière avec le reste du corps souple 4 (et est donc avantageusement réalisée en matériau élastomère ou en caoutchouc). Dans l'exemple illustré aux figures, la collerette formant la première lèvre extérieure d'étanchéité 4C est conçue pour se plaquer contre la face intérieure 2B du couvercle 2, lorsque le corps souple 4 est en position d'étanchéité, de manière à entourer l'orifice 3 et empêcher ainsi toute fuite de vapeur par l'orifice 3. Avantageusement, la première lèvre extérieure d'étanchéité 4C s'étend vers l'extérieur, à partir de la surface extérieure du corps souple 4, de préférence transversalement c'est-à-dire selon un plan moyen d'extension qui est sensiblement perpendiculaire à l'axe X-X'. La première lèvre extérieure d'étanchéité 4C forme ainsi une couronne périphérique faisant saillie de la surface externe du corps souple 4.

Avantageusement, le corps souple 4 comprend également une deuxième lèvre extérieure d'étanchéité 4D qui s'étend elle aussi à la périphérie du corps souple 4, de manière à se trouver en regard de la première lèvre extérieure d'étanchéité 4D, légèrement écartée de cette dernière. Les première et deuxième lèvres extérieures d'étanchéité 4C, 4D ménagent ainsi entre elles une gorge périphérique superficielle 4^{E} destinée à accueillir, une fois le corps souple 4 en position d'étanchéité, le rebord du couvercle 2 délimitant l'orifice 3, de façon que le rebord en question se retrouve interposé entre, et de préférence pincé par, les première et deuxième lèvres extérieures d'étanchéité 4C, 4D, pour assurer d'une part la fixation et l'immobilisation du corps souple 4 relativement à l'appareil de cuisson sous pression et d'autre part l'étanchéité de la liaison mécanique entre le corps souple 4 et l'appareil de cuisson (et plus précisément le couvercle 2 de ce dernier). Afin d'obtenir une bonne étanchéité, la distance séparant les première et deuxième lèvres extérieures d'étanchéité 4C, 4D est de préférence sensiblement égale, voire légèrement inférieure, à l'épaisseur du couvercle 2 dans la zone entourant l'orifice 3, de façon à ce que le bord du couvercle 2 délimitant l'orifice 3 soit inséré sensiblement en force entre les première et deuxième lèvres extérieures d'étanchéité 4C, 4D, pour garantir l'étanchéité.

Afin de faciliter le montage de la soupape 1 sur le couvercle 2, la deuxième lèvre extérieure d'étanchéité 4D présente avantageusement une forme profilée avec une surface supérieure 40D tronconique. Le montage du corps souple 4 sur l'appareil peut ainsi s'effectuer en positionnant le corps souple 4 du côté de la face intérieure 2B, en regard de l'orifice 3 (comme illustré à la figure 1), de façon que l'axe de symétrie X-X' du corps souple 4 soit sensiblement confondu avec l'axe de symétrie Y-Y' de l'orifice 3. Il suffit alors de presser le corps souple 4 dans l'orifice 3, ce qui engendre un déplacement axial du corps souple 4 dans l'orifice 3, facilité par la forme tronconique de la surface supérieure 40D. Le trajet axial du corps souple 4 se poursuit jusqu'à ce que l'espace libre situé entre les première et deuxième lèvres extérieures d'étanchéité 4C, 4D se trouvent en regard du bord du couvercle. A cet instant, le corps souple 4 qui était comprimé de façon centripète sous l'effet de son introduction en force dans l'orifice 3, se détend et vient capturer entre ses première et deuxième lèvres extérieures d'étanchéité 4C, 4D le bord du couvercle 2 délimitant l'orifice 3, ce qui aboutit à la position d'étanchéité illustrée par exemple aux figures 2 et 3.

L'obturateur 6 est par ailleurs conçu pour quitter sa position de fermeture afin d'autoriser une fuite de vapeur par l'ouverture 5 lorsque la pression régnant dans l'appareil (c'est-à-dire la pression régnant dans l'enceinte de cuisson délimitée par la cuve et le couvercle 2) atteint un premier niveau de sécurité, correspondant à une première valeur prédéterminée de pression à partir de laquelle le fonctionnement de l'appareil de cuisson sous pression est considéré comme anormal. Par exemple, le premier niveau de sécurité excède la pression atmosphérique d'une valeur prédéterminée sensiblement comprise entre 90 et 190 kPa, et de préférence sensiblement comprise entre 100 et 180 kPa. L'obturateur 6 est donc conçu pour subir un déplacement, consistant de préférence en une translation axiale du bas vers le haut, sous l'effet de l'atteinte (ou du dépassement) du premier niveau de sécurité par la pression régnant dans l'appareil. Dans ce cas, où la pression interne à l'appareil égale ou excède le premier niveau de sécurité, l'obturateur 6 est poussé par la pression hors de sa position de fermeture, ce qui a pour effet d'autoriser une fuite de vapeur par l'ouverture 5, laquelle était hermétiquement obturée par l'obturateur 6 tant que ce dernier se trouvait dans sa position de fermeture.

Avantageusement, et comme illustré aux figures, l'ouverture 5 comprend un conduit au sein duquel est monté l'obturateur 6, ledit conduit formant de préférence ladite ouverture 5. Avantageusement, le conduit en question présente une restriction de section localisée formant une lèvre intérieure d'étanchéité 7 présentant une face inférieure 7A et une face supérieure 7B opposée. Ladite lèvre intérieure d'étanchéité 7 se présente ainsi avantageusement sous la forme d'une couronne souple qui vient de préférence de matière avec le reste du corps couple 4 (et est donc avantageusement réalisée en matériau élastomère ou en caoutchouc). Ladite couronne souple présente de préférence un bord intérieur annulaire définissant un trou central 7C destiné à interagir avec l'obturateur 6 comme exposé ci-après, et un bord extérieur annulaire attaché à la surface intérieure du conduit formant l'ouverture 5. La lèvre intérieure d'étanchéité 7 s'étend ainsi à partir de la surface intérieure du conduit vers l'intérieur de ce dernier, selon un plan moyen d'extension perpendiculaire à l'axe X-X'. De préférence, comme illustré aux figures, le conduit formant l'ouverture 5 comprend lui-même un premier tronçon 50 et un deuxième tronçon 51 adjacents, lesdits premier et deuxième tronçons 50, 51 étant de sections transversales différentes, la lèvre intérieure d'étanchéité 7 assurant l'interface entre lesdits tronçons 50, 51. De préférence, la section du trou central 7C délimité par la lèvre intérieure d'étanchéité 7 est inférieure à la fois à la section du premier tronçon 50 et à celle du deuxième tronçon 51. Le premier tronçon 50 est conçu pour s'étendre axialement, lorsque la soupape 1 est montée en position fonctionnelle sur l'appareil, entre une première extrémité débouchant à l'intérieur de l'appareil et une deuxième extrémité connectée, par l'intermédiaire du trou central 7C, à une première extrémité du deuxième tronçon 51, lequel s'étend axialement entre cette première extrémité et une deuxième extrémité débouchant à l'extérieur de l'appareil.

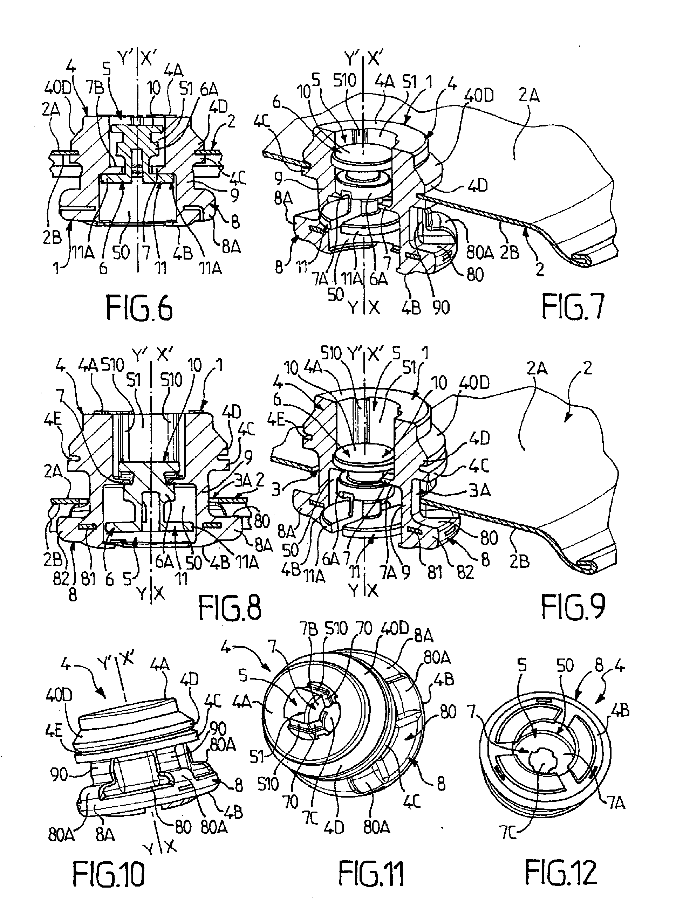

L'obturateur 6 comprend avantageusement une première collerette 6A destinée à venir en contact étanche avec la face inférieure 7A de la lèvre intérieure d'étanchéité 7 pour fermer le trou 7C et donc l'ouverture 5, lorsque l'obturateur 6 occupe sa position de fermeture. La première collerette 6A vient ainsi se plaquer contre la face inférieure 7A de la lèvre intérieure d'étanchéité 7 de façon à empêcher toute fuite de vapeur par le trou 7C, et ainsi autoriser la montée en pression de l'appareil. Avantageusement, la lèvre intérieure d'étanchéité 7 est conçue pour s'effacer élastiquement sous l'effet de la poussée exercée sur sa face inférieure 7A par la première collerette 6A lorsque la pression régnant dans l'appareil atteint le premier niveau de sécurité, de façon que ladite première collerette 6A se retrouve en regard de la face supérieure 7B, comme illustré aux figures 6 et 7. Dans ce mode de réalisation avantageux, le premier niveau de sécurité constitue un seuil au-delà duquel la force exercée sur l'obturateur 6 par la pression régnant dans l'appareil surpasse la résistance de la lèvre intérieure d'étanchéité 7, laquelle ploie pour laisser la première collerette 6A passer du premier tronçon 50 vers et dans le deuxième tronçon 51. Une fois que la première collerette 6A est passée de l'autre côté de la lèvre intérieure d'étanchéité 7 (dans le deuxième tronçon 51), cette dernière revient dans sa configuration normale par retour élastique. En d'autres termes, la déformation de la lèvre intérieure d'étanchéité 7 permettant le passage de la première collerette 6A du côté de la face supérieure 7B est transitoire et réversible. L'obturateur 6 est bien entendu conçu pour autoriser une fuite de vapeur par l'ouverture 3, et plus particulièrement par le trou 7C, lorsque sa première collerette 6A se retrouve en regard de la face supérieure 7B.

Comme illustré aux figures, le corps souple 4 est conçu pour quitter sa position d'étanchéité (illustrée aux figures 2 à 7) lorsque la pression régnant dans l'appareil atteint un deuxième niveau de sécurité, afin d'autoriser une fuite de vapeur par l'orifice 3. Cette caractéristique permet au corps souple 4 de jouer le rôle de sécurité ultime à la surpression. A cet effet, le deuxième niveau de sécurité est avantageusement supérieur au premier niveau de sécurité correspondant au déclenchement de l'obturateur 6, ce dernier jouant donc le rôle de première sécurité à la surpression. Par exemple, le deuxième niveau de sécurité excède la pression atmosphérique d'une valeur comprise sensiblement entre 200 et 400 kPa. Dans le cas préférentiel où le corps souple 4 est destiné à assurer une fonction de sécurité ultime à la surpression, le corps souple 4 ne quitte normalement sa position d'étanchéité que si l'obturateur 6 est lui-même bloqué dans sa position de fermeture (comme illustré à la figure 8) ou ne permet pas une fuite suffisante pour enrayer la montée en pression de l'appareil, autorisant ainsi la pression régnant dans l'appareil à excéder le premier niveau de sécurité. Ce blocage de l'obturateur 6 dans sa position de fermeture peut par exemple résulter de l'introduction intempestive et accidentelle d'un corps étranger dans l'ouverture 5.

La soupape de sécurité 1 comprend par ailleurs un premier organe de retenue 8 qui fait partie du corps souple 4. En d'autres termes, l'organe de retenue 8 est intégré au corps souple 4, c'est-à-dire qu'il forme avec ce dernier un sous-ensemble unitaire et indissociable. L'organe de retenue 8 est conçu pour empêcher la séparation de l'appareil (par exemple du couvercle 2 de ce dernier) et du corps souple 4 une fois que le corps souple 4 a quitté sa position d'étanchéité (comme illustré par exemple aux figures 6 et 7). En d'autres termes, l'organe de retenue 8 permet d'assurer en permanence, c'est-à-dire quel que soit le niveau de pression régnant dans l'appareil (y compris lorsque la pression atteint ou dépasse le deuxième niveau de sécurité) une liaison mécanique entre le corps souple 4 et l'appareil, de préférence entre le corps souple 4 et le couvercle 2 de l'appareil. L'organe de retenue 8 est avantageusement conçu pour relier de façon permanente le corps souple 4 et l'appareil tout en autorisant une mobilité du corps souple 4 relativement à l'appareil, afin de permettre au corps souple 4 de quitter sa position d'étanchéité tout en restant attaché au couvercle 2. Avantageusement, le premier organe de retenue 8 vient au moins partiellement de matière avec le corps souple 4. Dans ce mode de réalisation préférentiel illustré aux figures, l'organe de retenue 8 est majoritairement réalisé en un matériau qui est le même que celui utilisé pour réaliser le reste du corps souple 4, de sorte que l'organe de retenue 8 et le corps souple 4 forment par construction une seule et même pièce. De préférence, l'organe de retenue 8 et le corps souple 4 sont réalisés par une opération de moulage unique d'un matériau souple, comme par exemple un matériau élastomère ou un caoutchouc. De préférence, le premier organe de retenue 8 comprend une première butée 8A destinée à venir en appui de blocage contre le bord de l'orifice 3

(lequel est en l'espèce ménagé à travers le couvercle 2), à l'intérieur de l'appareil, lorsque le corps souple 4 quitte sa position d'étanchéité, sous l'effet de la l'atteinte, par la pression régnant dans l'appareil, du deuxième niveau de sécurité.

La première butée 8A forme ainsi avantageusement une surface de butée 80 conçue pour venir en appui contre la face interne 2B du couvercle 2, et plus précisément contre le rebord entourant l'orifice 3, de telle sorte que cet appui interne empêche le corps souple 4 d'être éjecté hors de l'orifice 3 sous l'effet de la pression régnant dans l'appareil. La rigidité et les dimensions de la première butée 8A sont déterminées de manière à ce que ladite première butée 8A procure un appui suffisant empêchant l'éjection du corps souple 4 quel que soit le niveau de pression régnant dans l'appareil. De préférence, ladite première butée 8A comprend un insert de renfort 81 et une enveloppe 82 au sein de laquelle est noyé ledit insert de renfort 81, ladite enveloppe 82 venant de préférence de matière avec le corps souple 4. De préférence, l'insert de renfort 81 est réalisé en un matériau métallique, afin de permettre au premier organe de retenue 8 d'assurer en permanence sa fonction, y compris en cas de dégradation du matériau souple (élastomère ou caoutchouc) formant le corps souple 4 sous l'effet par exemple d'un échauffement anormalement élevé. L'insert de renfort 81 se présente ainsi avantageusement sous la forme d'une rondelle plate en métal, de préférence noyée directement dans le corps souple 4, par exemple par surmoulage.

Avantageusement, et comme illustré aux figures, le premier organe de retenue 8 est formé par une collerette de retenue s'étendant à partir et vers l'extérieur du corps souple 4, ladite collerette de retenue étant adjacente ou voisine de l'extrémité inférieure 4A du corps souple 4. La surface de butée 80 correspond ainsi à la surface supérieure de la collerette de retenue. La surface de butée 80 présente avantageusement au moins une discontinuité géométrique permettant d'empêcher la réalisation d'un contact totalement étanche entre la surface de butée 80 et la portion de la face intérieure 2B du couvercle 2 formant la berge de l'orifice 3, afin de permettre une fuite de vapeur par la zone interstitielle 3A située entre le corps souple 4 et le bord de l'orifice 3. Par exemple, comme illustré aux figures, la surface de butée 80 est formée d'une surface plane circulaire à la surface de laquelle s'élève à intervalles réguliers des excroissances 80A. Lorsque le corps souple 4 quitte sa position d'étanchéité, sous l'effet d'une surpression excédant le deuxième niveau de sécurité, les excroissances 80A viennent en appui contre la face intérieure 2B du couvercle 2, de sorte qu'en dehors de ces zones d'appui, situées au droit des excroissances 80A, la vapeur peut s'échapper entre le corps souple 4 et le couvercle 2.

Avantageusement, la première lèvre extérieure d'étanchéité 4C est conçue pour passer, par déformation élastique sous l'effet de l'effort exercé sur la soupape 1 par la pression régnant dans l'appareil, à l'extérieur de l'appareil lorsque la pression régnant dans l'appareil atteint (ou dépasse) le deuxième de niveau de sécurité précité. En d'autres termes, la pression régnant dans l'appareil exerce une force verticale ascendante (c'est-à-dire de direction X-X' et du bas vers le haut) sur le corps souple 4, jusqu'à faire ployer la première lèvre extérieure d'étanchéité 4C lorsque la pression régnant dans l'appareil atteint ou dépasse le deuxième niveau de sécurité. L'effort exercé sur le corps souple 4 par la pression excède alors la résistance mécanique de la première lèvre d'étanchéité 4C, laquelle ne retient plus le corps souple 4 qui est libre d'être propulsé vers l'extérieur sous l'effet de la pression. Avantageusement, la déformation élastique de la première lèvre extérieure d'étanchéité 4C, qui permet le déplacement du corps souple 4 hors de sa position d'étanchéité, présente un caractère transitoire et réversible. Il s'agit donc d'une déformation élastique qui cesse dès lors que le corps souple 4 a quitté sa position d'étanchéité et que la première lèvre extérieure d'étanchéité 4C ne subit plus de contrainte mécanique par contact avec le bord de l'orifice 3. La première lèvre extérieure d'étanchéité 4C, qui se trouve ainsi initialement (lorsque le corps souple 4 est en position d'étanchéité) en regard de la face interne 2B du couvercle 2, se retrouve alors en regard de la face extérieure 2A du couvercle 2, comme illustré aux figures 8 et 9. La course du corps souple 4 vers l'extérieur, selon la direction X-X', peut se poursuivre sous l'effet de la force motrice exercée par la pression régnant dans l'appareil jusqu'à ce que le premier organe de retenue 8 vienne en butée contre la face intérieure 2B du couvercle 2, empêchant ainsi la désolidarisation complète de la soupape et du couvercle 2. De préférence, la première lèvre extérieure d'étanchéité 4C et le premier organe de retenue 8 sont séparés par une première portion 9 du corps souple 4 s'élevant axialement à partir de l'organe de retenue 8 jusqu'à la première lèvre extérieure d'étanchéité 4C. La surface extérieure de cette première portion 9 est avantageusement sensiblement cylindrique à base circulaire, à l'exception de zones de guidage 90 qui font saillie, vers l'extérieur, à partir de la surface extérieure de la première portion 9. De préférence, ces zones 90 en saillie sont positionnées dans le prolongement des excroissances 80A (de sorte à former un profil en L avec ces dernières) et sont destinées à assurer un guidage non étanche du corps souple 4 à travers l'orifice 3 lorsque le corps souple 4 quitte sa position d'étanchéité.

La présence de ces zones en saillie 90 permet de garantir l'existence de l'espace interstitiel 3A entre le corps souple 4 et le bord de l'orifice 3 lorsque le corps souple 4 quitte sa position d'étanchéité.

Avantageusement, l'obturateur 6 est conçu pour occuper, tant que la pression régnant dans l'appareil est inférieure à un niveau prédéterminé de fin de purge qui est avantageusement inférieur au premier niveau de sécurité, une position basse de fuite dans laquelle l'obturateur 6 autorise la mise en communication de l'intérieur de l'appareil avec l'extérieur, par l'ouverture 5. Ceci permet de purger l'enceinte de cuisson de l'air qu'elle contient, au début du cycle de cuisson, sous l'effet de la montée en pression. Lorsque la pression régnant dans l'appareil atteint le niveau prédéterminé de fin de purge, lequel est par exemple compris entre sensiblement 1 kPa et 3 kPa, la force exercée par la pression sur l'obturateur 6 est suffisante pour surmonter le poids de ce dernier et repousser l'obturateur 6 dans sa position de fermeture.

Avantageusement, la soupape comprend un troisième moyen de retenue 10 conçu pour empêcher l'obturateur 6 de se séparer du corps souple 4 sous l'effet du propre poids de l'obturateur 6. Le troisième moyen de retenue 10 est avantageusement solidaire de l'obturateur 6 et est conçu pour venir reposer sur la face supérieure 7B de la lèvre intérieure d'étanchéité 7, sous l'effet du poids de l'obturateur 6, tant que la pression régnant dans l'appareil est inférieure au niveau prédéterminé de fin de purge. Le troisième moyen de retenue 10 comprend avantageusement une deuxième collerette 10A destinée à venir en appui, sous l'effet du poids de l'obturateur 6, contre la face supérieure 7B de la lèvre intérieure d'étanchéité 7, comme illustré aux figures 2 et 3. Avantageusement, la face supérieure 7B de la lèvre intérieure d'étanchéité 7 comprend des excroissances 70 localisées permettant d'éviter que le contact entre la collerette 10A du troisième moyen de retenue 10 et la face supérieure 7B de la lèvre intérieure d'étanchéité 7 ne soit étanche. La présence des excroissances 70 permet de ménager, entre chaque excroissance 70, un espace interstitiel entre la face supérieure 7B et la deuxième collerette 10A autorisant la mise en communication de l'intérieur de l'enceinte avec l'extérieur. La deuxième collerette 10A est localisée de préférence vers une première extrémité de l'obturateur 6, et est connectée à la première collerette 6A par un premier tronçon 12 de l'obturateur 6 dont la section est inférieure à celle des première et deuxième collerettes 6A, 10A et du trou central 7C (afin de coulisser librement à travers ce dernier) et qui présente avantageusement une forme tronconique s'évasant de la deuxième collerette 10A vers la première collerette 6A. Cette forme tronconique permet notamment de modifier la section de fuite dans un sens favorable lorsque la soupape est montée improprement, comme cela sera expliqué plus en détail dans ce qui suit.

Avantageusement, la soupape 1 comprend également un deuxième organe de retenue 11 conçu pour empêcher la séparation du corps souple 4 de l'obturateur 6 une fois que ce dernier a quitté sa position de fermeture sous l'effet de l'atteinte, par la pression régnant dans l'appareil, du premier niveau de sécurité. De préférence, le deuxième organe de retenue 11 comprend une troisième collerette 11A positionnée avantageusement à une extrémité de l'obturateur 6 qui est opposé à celle où se trouve la deuxième collerette 10A, de façon que la première collerette 6A soit interposée entre la deuxième collerette 10A et la troisième collerette 11A, comme illustré aux figures. Avantageusement, la section de la troisième collerette 11A est supérieure à la fois à la section de la première collerette 6A et à celle de la deuxième collerette 10A, étant entendu d'une part que la deuxième collerette 10A présente avantageusement une section supérieure à celle de la première collerette 6A, et d'autre part que la section des première, deuxième et troisième collerettes 6A, 10A, 11A est supérieure à celle du trou central 7C. Le deuxième organe de retenue 11 comprend avantageusement une deuxième butée formée en l'espèce par la troisième collerette 11A, ladite deuxième butée étant solidaire de l'obturateur 6 et étant conçue pour venir en appui de blocage contre la face inférieure 7A de la lèvre intérieure d'étanchéité 7 lorsque la pression régnant l'appareil atteint (ou excède) le premier niveau de sécurité. Ainsi, si la première collerette 6A est conçue, compte tenu notamment de ses dimensions, pour passer en force à travers le trou central 7C, ceci n'est pas le cas du deuxième organe de retenue 11 dont les dimensions sont suffisantes pour que même sous l'effet d'un effort mécanique important, exercé par la pression régnant dans l'enceinte de cuisson, la troisième collerette 11A ne puisse passer à travers le trou central 7C. Ceci empêche toute éjection brutale de l'obturateur 6 sous l'effet d'une surpression, y compris de niveau élevé.

Avantageusement, la première collerette 6A et la troisième collerette 11A sont reliées l'une à l'autre par un deuxième tronçon 13 de l'obturateur 6, qui s'étend entre la troisième collerette 11A et la première collerette 6A.

De préférence, un évidement 14 est ménagé à la fois à travers la première collerette 11A, le deuxième tronçon 13 et la première collerette 6A, de façon à permettre, lorsque l'obturateur 6 a quitté sa position de fermeture (comme illustré aux figures 6 et 7), à la vapeur de s'échapper par l'évidement 14, en passant tout d'abord par le premier tronçon 50, puis par l'évidement 14, pour ensuite se retrouver dans le deuxième tronçon 51 qui communique avec l'extérieur. Le deuxième tronçon 51 est avantageusement pourvu de protubérances de guidage 510 qui s'étendent verticalement sur la surface intérieure du deuxième tronçon 51 pour guider la deuxième collerette 10A dans son déplacement vertical tout en empêchant un contact totalement étanche entre la surface intérieure du deuxième tronçon 51 et la deuxième collerette 10A. Les protubérances de guidage 510 permettent ainsi de ménager un espace interstitiel entre la surface intérieure du deuxième tronçon 51 et la surface latérale de la deuxième collerette 10A, permettant l'échappement de la vapeur en provenance de l'évidement 14.

La description qui précède est focalisée sur la soupape de sécurité 1 et sur sa relation avec l'appareil de cuisson, et plus particulièrement le couvercle 2 de ce dernier. L'invention concerne toutefois également en tant que tel un dispositif de cuisson sous pression comprenant d'une part un appareil de cuisson sous pression de vapeur pourvu d'un orifice 3 mettant en communication l'intérieur de l'appareil avec l'extérieur et d'autre part une soupape de sécurité 1 conforme à la description qui précède.

Dans ce qui suit, le fonctionnement du dispositif de cuisson illustré aux figures, et plus particulièrement de sa soupape de sécurité 1, va être exposé en détails.

En premier lieu, la soupape est assemblée en usine sur le couvercle 2 de l'appareil de cuisson sous pression de vapeur de la façon suivante :
- la soupape est disposée comme illustré sur la figure 1, c'est-à-dire de façon que son extrémité supérieure 4A soit située en regard de la face interne 2B du couvercle 2, au droit de l'orifice 3, de façon que l'axe de symétrie de la soupape X-X' soit confondu avec l'axe de symétrie Y-Y' de l'orifice 3 ;
- la soupape est ensuite enfilée en force dans l'orifice 3, par translation selon la direction matérialisée par l'axe Y-Y'; la forme tronconique de la deuxième lèvre extérieure d'étanchéité 4D permet de faciliter l'introduction en force de la soupape 1 dans l'orifice 3, jusqu'à ce que le bord du couvercle 2 délimitant l'orifice 3 soit capturé dans l'espace interstitiel 4E, entre les première et deuxième lèvres d'étanchéité 4C, 4D comme illustré aux figures 2 et 3.

L'appareil de cuisson sous pression est alors prêt à être utilisé. A cette fin, l'utilisateur introduit tout d'abord dans la cuve de l'appareil de cuisson des aliments et un liquide de cuisson, par exemple de l'eau. L'utilisateur rapporte ensuite le couvercle 2 (équipé de la soupape 1) sur la cuve et verrouille le couvercle 2 sur la cuve à l'aide d'un moyen de verrouillage / déverrouillage (par exemple à mâchoires, étriers, baïonnette ou autre). Un joint d'étanchéité (non représenté) est interposé entre la cuve et le couvercle 2 pour permettre la montée en pression de l'appareil.

L'utilisateur place ensuite l'appareil de cuisson sous pression verrouillé sur une source de chauffe, par exemple une plaque chauffante. A cet instant, la pression régnant dans l'appareil est sensiblement égale ou voisine de la pression atmosphérique, de sorte que le troisième moyen de retenue 10 repose sur la face supérieure 7B de la lèvre intérieure d'étanchéité 7, sous l'effet du poids de l'obturateur 6, comme illustré aux figures 2 et 3. Dans cette configuration, l'intérieur de l'enceinte de cuisson communique avec l'extérieur par le trou central 7C, comme exposé précédemment. La pression augmente alors au sein de l'enceinte de cuisson, sous l'influence de la source de chauffe, jusqu'à atteindre le niveau prédéterminé de fin de purge. Lorsque ce niveau est atteint ou dépassé par la pression interne à l'appareil, l'obturateur 6 est poussé vers le haut jusqu'à ce que sa première collerette 6A vienne en contact étanche avec la face inférieure 7A de la lèvre intérieure d'étanchéité 7, comme illustré aux figures 4 et 5. Dans cette configuration, la soupape 1 obture hermétiquement l'orifice 3, ce qui permet à l'appareil de monter en pression jusqu'à atteindre le niveau de pression de fonctionnement (lequel excède par exemple la pression atmosphérique d'une valeur comprise sensiblement entre 10 et 90 kPa).

Le cycle de cuisson se poursuit alors en ambiance vapeur, étant entendu qu'une fraction importante, sinon majoritaire, de l'air présent initialement dans l'enceinte de cuisson a été chassé en début de cuisson jusqu'à ce que la pression atteigne le niveau prédéterminé de fin de purge.

Si, pour une raison ou pour une autre, la pression régnant au sein de l'appareil dépasse d'une valeur anormale et incontrôlée la pression prédéterminée de fonctionnement, pour atteindre le premier niveau de sécurité, la force exercée sur l'obturateur 6 par la pression sera suffisante pour déformer la lèvre intérieure d'étanchéité 7 et permettre le passage de la première collerette 6A par le trou central 7C. La première collerette 6A se retrouvera alors dans le deuxième tronçon 51, comme illustré aux figures 6 et 7. La troisième collerette 11A vient se plaquer, sous l'effet de la pression, contre la face inférieure 7A de la lèvre intérieure d'étanchéité 7, empêchant ainsi la désolidarisation de l'obturateur 6 et du corps souple 4 sous l'effet de la pression. Dans cette configuration, la vapeur peut s'échapper par l'évidement 14 puis par le tronçon 51, ce qui permet une chute de la pression.

Si cette chute de pression ne se produit pas (par exemple sous l'effet d'un dysfonctionnement de l'obturateur, qui soit reste coincé dans sa position de fermeture, soit n'autorise pas une fuite de vapeur lorsqu'il se trouve dans la position de fuite des figures 6 et 7), et que la pression atteint le deuxième niveau de sécurité, alors le corps souple 4, qui embarque l'obturateur 6, est repoussé hors de sa position d'étanchéité (comme illustré aux figures 8 et 9) par déformation de sa première lèvre extérieure d'étanchéité 4C. Le corps souple 4 est empêché d'être détaché complètement du couvercle 2 grâce à la présence de l'organe de retenue 8, qui vient en appui contre le bord interne de l'orifice 3. Dans cette position, une fuite de vapeur est rendue possible par l'espace interstitiel 3A entre le corps souple 4 et le bord latéral de l'orifice 3.

L'ensemble des déformations conduisant aux différentes positions relatives du corps souple 4, du couvercle 2 et de l'obturateur 6 étant réversible, l'utilisateur peut très facilement réarmer la soupape 1 (en repoussant par exemple l'obturateur 6 dans sa position de repos illustrée aux figures 2 et 3) et remonter la soupape 1 dans l'orifice 3.

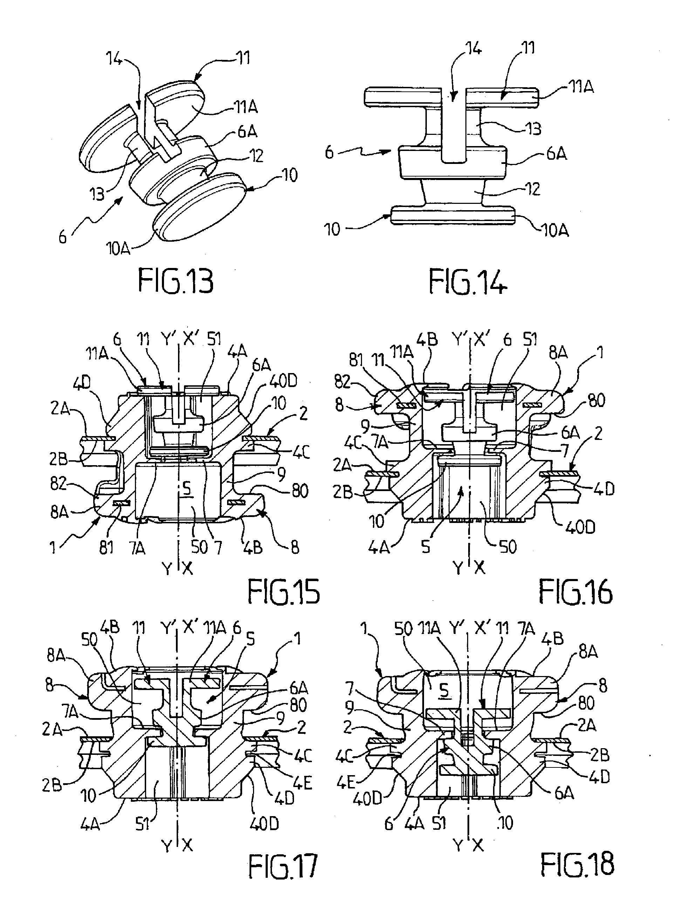

La conception spécifique de la soupape de sécurité 1 illustrée aux figures permet en outre d'éviter tout risque découlant d'un mauvais remontage de la soupape 1. Ainsi, si l'utilisateur monte à l'envers, comme illustré à la figure 15, l'obturateur 6 sur le corps souple 4, le deuxième organe de retenue 11 est conçu pour venir en butée contre la surface supérieure 4A du corps souple 4, empêchant ainsi la deuxième collerette 10A de passer à travers le trou central 7C dans le premier tronçon 50.

Si l'utilisateur monte cette fois l'intégralité de la soupape 1 à l'envers sur le couvercle 2, comme illustré à la figure 16, l'appareil sera empêché de monter significativement en pression grâce à la présence des excroissances 70 qui empêchent la mise en oeuvre d'un contact complètement étanche entre la deuxième collerette 10A et la face supérieure 7B de la lèvre intérieure d'étanchéité 7, l'effet de fuite étant accentué au fur et à mesure de la montée en pression de l'appareil grâce à la forme tronconique du deuxième tronçon 21 de l'obturateur 6 qui accroît la section de fuite au fur et à mesure que l'obturateur 6 se soulève lorsqu'il se trouve dans la configuration illustrée à la figure 16. Le comportement exposé précédemment en ce qui concerne la configuration de la figure 16 vaut également pour la configuration de la figure 17, qui ne diffère de la figure 16 que par le fait que le corps souple 4 est en outre mal monté sur le couvercle 2, puisque le bord de l'orifice 3 n'est pas inséré dans l'espace interstitiel 4E.

Enfin, si l'utilisateur monte non seulement le corps souple 4 en inversant le couvercle 2 mais positionne en outre l'obturateur 6 de façon que la lèvre intérieure d'étanchéité 7 soit interposée entre la première collerette 6A et la troisième collerette 11A, comme illustré à la figure 18, alors l'appareil ne pourra monter significativement en pression puisque la vapeur pourra s'échapper par l'évidement 14, qui met en communication le premier tronçon 50 avec le deuxième tronçon 51.

On voit donc que la conception retenue permet, par des moyens très simples et fiables, d'empêcher qu'un éventuel mauvais remontage de la soupape 1 puisse conduire à une montée significative en pression de l'appareil, jusqu'à un niveau potentiellement dangereux pour l'utilisateur.

La conception spécifiquement retenue pour la soupape 1 permet donc d'obtenir un fonctionnement fiable et sûr, de manière extrêmement simple et bon marché.

## Revendications

1. Soupape de sécurité (1) pour appareil de cuisson sous pression de vapeur pourvu d'un orifice (3) mettant en communication l'intérieur de l'appareil avec l'extérieur, ladite soupape (1) comprenant d'une part un corps souple (4) traversé par une ouverture (5) et d'autre part un obturateur (6) embarqué sur le corps souple (4) pour occuper au moins une position de fermeture de ladite ouverture (5), ledit corps souple (4) étant conçu pour être monté sur l'appareil de façon à occuper au moins une position d'étanchéité dans laquelle la soupape (1) ferme ledit orifice (3), ledit obturateur (6) étant conçu pour quitter sa position de fermeture afin d'autoriser une fuite de vapeur par ladite ouverture (5) lorsque la pression régnant dans l'appareil atteint un premier niveau de sécurité, **caractérisée en ce que** ledit corps souple (4) est conçu pour quitter sa position d'étanchéité afin d'autoriser une fuite de vapeur par ledit orifice (3) lorsque la pression régnant dans l'appareil atteint un deuxième niveau de sécurité, ladite soupape (1) comprenant un premier organe de retenue (8) qui fait partie du corps souple (4) et qui est conçu pour empêcher la séparation de l'appareil et du corps souple (4) une fois que ce dernier a quitté sa position d'étanchéité.

2. Soupape (1) selon la revendication 1 **caractérisée en ce que** ledit deuxième niveau de sécurité est supérieur audit premier niveau de sécurité.

3. Soupape (1) selon la revendication 1 ou 2 **caractérisée en ce que** le premier organe de retenue (8) vient au moins partiellement, de matière avec le corps souple (4).

4. Soupape (1) selon l'une des revendications 1 à 3 **caractérisée en ce que** le premier organe de retenue (8) comprend une première butée (8A) destinée à venir en appui de blocage contre le bord dudit orifice (3), à l'intérieur de l'appareil, lorsque le corps souple (4) quitte sa position d'étanchéité.

5. Soupape (1) selon la revendication 4 **caractérisée en ce que** ladite première butée (8A) comprend un insert de renfort (81) et une enveloppe (82) au sein de laquelle est noyé ledit insert de renfort (81).

6. Soupape (1) selon les revendications 3 et 5 **caractérisée en ce que** ladite enveloppe (82) vient de matière avec le corps souple (4).

7. Soupape (1) selon l'une des revendications 1 à 6 **caractérisée en ce que** ledit corps souple (4) comprend au moins une première lèvre extérieure d'étanchéité (4C) conçue pour assurer une interface de contact étanche entre l'appareil et le corps souple lorsque ce dernier occupe sa position d'étanchéité, ladite première lèvre extérieure d'étanchéité (4C) étant conçue pour se trouver à l'intérieur de l'appareil tant que le corps souple (4) occupe sa position d'étanchéité, et pour passer, par déformation élastique sous l'effet de l'effort exercé sur la soupape (1) par la pression régnant dans l'appareil, à l'extérieur de l'appareil lorsque la pression régnant dans l'appareil atteint ledit deuxième niveau de sécurité.

8. Soupape (1) selon l'une des revendications 1 à 7 **caractérisée en ce que** ledit obturateur (6) est conçu pour occuper, tant que la pression régnant dans l'appareil est inférieure à un niveau prédéterminé de fin de purge qui est inférieur au premier niveau de sécurité, une position basse de fuite dans laquelle il autorise la mise en communication de l'intérieur de l'appareil avec l'extérieur par ladite ouverture (5).

9. Soupape (1) selon les revendications 1 à 8 **caractérisée en ce que** ladite ouverture (5) comprend un conduit au sein duquel est monté ledit obturateur (6), ledit conduit présentant une restriction de section localisée formant une lèvre intérieure d'étanchéité (7) présentant une face inférieure (7A) et une face supérieure (7B) opposée, ledit obturateur (6) comprenant une première collerette (6A) destinée à venir en contact étanche avec ladite face inférieure (7A) pour fermer l'ouverture (3) lorsque l'obturateur (6) occupe sa position de fermeture.

10. Soupape (1) selon la revendication 8 ou 9 **caractérisée en ce que** ladite lèvre intérieure d'étanchéité (7) est conçue pour s'effacer élastiquement sous l'effet de la poussée exercée sur sa face inférieure (7A) par ladite première collerette lorsque la pression régnant dans l'appareil atteint le premier niveau de sécurité, de façon que ladite première collerette (6A) se retrouve en regard de ladite face supérieure (7B).

11. Soupape (1) selon l'une des revendications 1 à 10 **caractérisée en ce qu'**elle comprend un deuxième organe de retenue (11) conçu pour empêcher la séparation du corps souple (4) et de l'obturateur (6) une fois que ce dernier a quitté sa position de fermeture sous l'effet de l'atteinte, par la pression régnant dans l'appareil, du premier niveau de sécurité.

12. Soupape (1) selon les revendications 10 et 11 **caractérisée en ce que** le deuxième organe de retenue (11) comprend une deuxième butée qui est solidaire de l'obturateur (6) et est conçue pour venir en appui de blocage contre la face inférieure (7A) de la lèvre intérieure d'étanchéité (7) lorsque la pression régnant dans l'appareil atteint le premier niveau de sécurité.

13. Soupape (1) selon l'une des revendications 1 à 12 **caractérisée en ce qu'**elle comprend un troisième moyen de retenue (10) conçu pour empêcher l'obturateur (6) de se séparer du corps souple (4) sous l'effet du propre poids de l'obturateur (6).

14. Soupape (1) selon la revendication 13 **caractérisée en ce que** ledit troisième moyen de retenue est solidaire de l'obturateur (6) et est conçu pour venir reposer sur ladite face supérieure (7B) de la lèvre intérieure d'étanchéité (7), sous l'effet du poids de l'obturateur (6), tant que la pression régnant dans l'appareil est inférieure à un niveau prédéterminé de fin de purge.

15. Dispositif de cuisson sous pression comprenant :
- un appareil de cuisson sous pression de vapeur pourvu d'un orifice (3) mettant en communication l'intérieur de l'appareil avec l'extérieur,
- et une soupape de sécurité (1) conforme à l'une des revendications précédentes.

## Patentansprüche

1. Sicherheitsventil (1) für ein Dampfdruckkochgerät, versehen mit einer Öffnung (3), die das Innere des Geräts mit außen verbindet, wobei das Ventil (1) einerseits einen biegsamen Körper (4), durch den eine Öffnung (5) hindurchgeht, und andererseits ein Verschlusselement (6) umfasst, das auf dem biegsamen Körper (4) vorgesehen ist, um mindestens eine Verschlussposition der Öffnung (5) einzunehmen, wobei der biegsame Körper (4) derart ausgeführt ist, dass er auf dem Gerät derart montiert wird, dass er mindestens eine Abdichtungsposition einnimmt, in der das Ventil (1) die Öffnung (3) verschließt, wobei das Verschlusselement (6) derart ausgeführt ist, dass es seine Verschlussposition verlässt, um einen Dampfaustritt durch die Öffnung (5) zu gestatten, wenn der in dem Gerät herrschende Druck ein erstes Sicherheitsniveau erreicht, **dadurch gekennzeichnet, dass** der biegsame Körper (4) derart ausgeführt ist, dass er seine Abdichtungsposition verlässt, um einen Dampfaustritt durch die Öffnung (3) zu gestatten, wenn der in dem Gerät herrschende Druck ein zweites Sicherheitsniveau erreicht, wobei das Ventil (1) ein erstes Halteelement (8) umfasst, das Teil des biegsamen Körpers (4) und derart ausgeführt ist, dass es die Trennung des Geräts und des biegsamen Körpers (4) verhindert, wenn dieser letztgenannte seine Abdichtungsposition verlassen hat.

2. Ventil (1) nach Anspruch 1, **dadurch gekennzeichnet, dass** das zweite Sicherheitsniveau höher als das erste Sicherheitsniveau ist.

3. Ventil (1) nach Anspruch 1 oder 2, **dadurch gekennzeichnet, dass** das erste Halteelement (8) zumindest teilweise mit dem biegsamen Körper (4) aus einem Stück ist.

4. Ventil (1) nach einem der Ansprüche 1 bis 3, **dadurch gekennzeichnet, dass** das erste Halteelement (8) einen ersten Anschlag (8A) umfasst, der dazu bestimmt ist, an dem Rand der Öffnung (3) innerhalb des Geräts blockierend abgestützt zu werden, wenn der biegsame Körper (4) seine Abdichtungsposition verlässt.

5. Ventil (1) nach Anspruch 4, **dadurch gekennzeichnet, dass** der erste Anschlag (8A) einen Verstärkungseinsatz (81) und eine Hülle (82) umfasst, in die der Verstärkungseinsatz (81) eingesetzt ist.

6. Ventil (1) nach den Ansprüchen 3 und 5, **dadurch gekennzeichnet, dass** die Hülle (82) mit dem biegsamen Körper (4) aus einem Stück ist.

7. Ventil (1) nach einem der Ansprüche 1 bis 6, **dadurch gekennzeichnet, dass** der biegsame Körper (4) mindestens eine erste äußere Dichtungslippe (4C) umfasst, die derart ausgeführt ist, dass sie eine dichte Kontaktschnittstelle zwischen dem Gerät und dem biegsamen Körper gewährleistet, wenn dieser letztgenannte seine Abdichtungsposition einnimmt, wobei die erste äußere Dichtungslippe (4C) derart ausgeführt ist, dass sie sich innerhalb des Geräts befindet, solange der biegsame Körper (4) seine Abdichtungsposition einnimmt, und dass sie durch elastische Verformung unter der Wirkung der auf das Ventil (1) durch den im Gerät herrschenden Druck ausgeübten Kraft außerhalb des Geräts gelangt, wenn der in dem Gerät herrschende Druck das zweite Sicherheitsniveau erreicht.

8. Ventil (1) nach einem der Ansprüche 1 bis 7, **dadurch gekennzeichnet, dass** das Verschlusselement (6) derart ausgeführt ist, dass es, solange der in dem Gerät herrschende Druck geringer als ein vorbestimmtes Niveau des Ablassendes ist, das niedriger als das erste Sicherheitsniveau ist, eine untere Leckageposition einnimmt, in der es die Herstellung einer Verbindung zwischen dem Inneren des Geräts und außen über die Öffnung (5) gestattet.

9. Ventil (1) nach den Ansprüchen 1 bis 8, **dadurch gekennzeichnet, dass** die Öffnung (5) eine Leitung umfasst, in der das Verschlusselement (6) montiert ist, wobei die Leitung eine lokalisierte Querschnittsverminderung aufweist, die eine innere Dichtungslippe (7) bildet, die eine Unterseite (7A) und eine gegenüberliegende Oberseite (7B) aufweist, wobei das Verschlusselement (6) einen ersten Kragen (6A) umfasst, der dazu bestimmt ist, mit der Unterseite (7A) in dichten Kontakt zu kommen, um die Öffnung (3) zu verschließen, wenn das Verschlusselement (6) seine Verschlussposition einnimmt.

10. Ventil (1) nach Anspruch 8 oder 9, **dadurch gekennzeichnet, dass** die innere Dichtlippe (7) derart ausgeführt ist, dass sie sich elastisch unter der Wirkung des auf ihre Unterseite (7A) von dem ersten Kragen ausgeübten Schub zurückzieht, wenn der in dem Gerät herrschende Druck das erste Sicherheitsniveau erreicht, so dass der erste Kragen (6A) gegenüber die Oberseite (7B) gelangt.

11. Ventil (1) nach einem der Ansprüche 1 bis 10, **dadurch gekennzeichnet, dass** es ein zweites Halteelement (11) umfasst, das derart ausgeführt ist, dass es die Trennung des biegsamen Körpers (4) und des Verschlusselements (6) verhindert, wenn dieses letztgenannte seine Verschlussposition unter der Wirkung des Erreichens des ersten Sicherheitsniveaus durch den in dem Gerät herrschenden Druck verlassen hat.

12. Ventil (1) nach den Ansprüchen 10 und 11, **dadurch gekennzeichnet, dass** das zweite Halteelement (11) einen zweiten Anschlag umfasst, der mit dem Verschlusselement (6) verbunden und derart ausgeführt ist, dass er blockierend an der Unterseite (7A) der inneren Dichtungslippe (7) abgestützt wird, wenn der in dem Gerät herrschende Druck das erste Sicherheitsniveau erreicht.

13. Ventil (1) nach einem der Ansprüche 1 bis 12, **dadurch gekennzeichnet, dass** es ein drittes Haltemittel (10) umfasst, das derart ausgeführt ist, dass es das Verschlusselement (6) daran hindert, sich von dem biegsamen Körper (4) unter der Wirkung des Eigengewichts des Verschlusselements (6) zu trennen.

14. Ventil (1) nach Anspruch 13, **dadurch gekennzeichnet, dass** das dritte Haltemitte mit dem Verschlusselement (6) verbunden und derart ausgeführt ist, dass es auf der Oberseite (7B) der inneren Dichtungslippe (7) unter der Wirkung des Gewichts des Verschlusselements (6) zur Auflage kommt, solange der in dem Gerät herrschende Druck geringer als ein vorbestimmtes Niveau des Ablassendes ist.

15. Druckkochvorrichtung, umfassend:
- ein Dampfdruckkochgerät, das mit einer Öffnung (3) versehen ist, die das Innere des Geräts mit außen in Verbindung bringt,
- und ein Sicherheitsventil (1) nach einem der vorhergehenden Ansprüche.

## Claims

1. A safety valve (1) for a steam pressure cooking utensil provided with an orifice (3) for putting the inside of the utensil into communication with the outside thereof, said valve (1) comprising firstly a flexible body (4) through which an opening (5) passes, and secondly a closure member (6) incorporated in the flexible body (4) to take up at least a closure position in which it closes said opening (5), said flexible body (4) being designed to be mounted on the utensil in such a manner as to take up at least a sealing position in which the valve (1) closes said orifice (3), said closure member (6) being designed to leave its closure position in order to allow steam to leak via said opening (5) whenever the pressure prevailing inside the utensil reaches a first safety level, said safety valve being **characterized in that** said flexible body (4) is designed to leave its sealing position in order to allow steam to leak via said orifice (3) whenever the pressure prevailing inside the utensil reaches a second safety level, said valve (1) further comprising a first retaining member (8) that is part of the flexible body (4) and that is designed to prevent the utensil and the flexible body (4) from coming apart once said flexible body has left its sealing position.

2. A valve (1) according to claim 1, **characterized in that** said second safety level is greater than said first safety level.

3. A valve (1) according to claim 1 or 2, **characterized in that** at least part of the first retaining member (8) is made integrally with the flexible body (4).

4. A valve (1) according to any one of claims 1 to 3, **characterized in that** the first retaining member (8) is provided with a first abutment (8A) designed to come into blocking abutment against the edge of said orifice (3), inside the utensil, when the flexible body (4) leaves its sealing position.

5. A valve (1) according to claim 4, **characterized in that** said first abutment (8A) comprises a reinforcing insert (81) and cladding (82) within which said reinforcing insert (81) is embedded.

6. A valve (1) according to claims 3 and 5, **characterized in that** the first retaining member (82) is made integrally with the flexible body (4).

7. A valve (1) according to any one of claims 1 to 6, **characterized in that** said flexible body (4) is provided with at least a first external sealing lip (4C) designed to form a sealed contact interface between the utensil and the flexible body (4) when said flexible body takes up its sealing position, said first external sealing lip (4C) being designed to find itself inside the utensil so long as the flexible body 4 is in its sealing position, and, by deforming elastically under the effect of the force exerted on the valve (1) by the pressure prevailing inside the utensil, to go outside the utensil whenever the pressure prevailing inside the utensil reaches said second safety level.

8. A valve (1) according to any one of claims 1 to 7, **characterized in that** said closure member (6) is designed in such a manner that, so long as the pressure prevailing inside the utensil is less than a predetermined end-of-bleed level that is less than the first safety level, said closure member takes up a low position for leakage in which it allows the inside of the utensil to be put into communication with the outside thereof, via the opening (5).

9. A valve (1) according to any one of claims 1 to 8, **characterized in that** said opening (5) comprises a duct inside which said closure member (6) is mounted, said duct having a localized constriction forming an internal sealing lip (7) having a bottom face (7A) and top face (7B) opposite from the bottom face, said closure member (6) being provided with a first flange (6A) designed to come into sealed contact with said bottom face (7A) so as to close the opening (3) when the closure member (6) takes up its closure position.

10. A valve (1) according to claim 8 or claim 9, **characterized in that** said internal sealing lip (7) is designed to retract resiliently under the thrust exerted on its bottom face (7A) by the first flange whenever the pressure prevailing inside the utensil reaches the first safety level, in such a manner that said first flange (6A) finds itself facing said top face (7B).

11. A valve (1) according to any one of claims 1 to 10, **characterized in that** it is provided with a second retaining member (11) designed to prevent the flexible body (4) and the closure member (6) from coming apart once said closure member has left its closure position under the effect the pressure prevailing inside the utensil reaching the first safety level.

12. A valve (1) according to claims 10 and 11, **characterized in that** the second retaining member (11) is provided with a second abutment that is integral with the closure member (6) and is designed to come into blocking abutment against the bottom face (7A) of the internal sealing lip (7) whenever the pressure prevailing inside the utensil reaches the first safety level.

13. A valve (1) according to any one of claims 1 to 12, **characterized in that** it is provided with third retaining means (10) designed to prevent the closure member (6) from coming apart from the flexible body (4) under the effect of the weight of the closure member (6).

14. A valve (1) according to claim 13, **characterized in that** said third retaining means are integral with the closure member (6) and are designed to come to rest on said top face (7B) of the internal sealing lip (7), under the effect of the weight of the closure member (6), so long as the pressure prevailing inside the utensil is less than a predetermined end-of-bleed level.

15. A pressure cooking device comprising:
- a pressure cooking utensil provided with an orifice (3) putting the inside of the utensil into communication with the outside thereof; and
- a safety valve (1) according to any preceding claim.
